# EUROPEAN PATENT SPECIFICATION

(11) **EP 2 116 158 B1**
(45) Date of publication and mention of the grant of the patent: **29.08.2012**
(21) Application number: 08724070.1
(22) Date of filing: 01.02.2008
(51) Int. Cl.: A47J 27/00, A47J 27/21

(54) **FOOD COOKING DEVICE**
LEBENSMITTELGAREINRICHTUNG
DISPOSITIF DE TRAITEMENT THERMIQUE D'ALIMENTS

(30) Priority: 13.02.2007 RU 2007105474
(43) Date of publication of application: 11.11.2009
(73) Proprietor: Sibovar Limited, Tomsk City 634055 (RU)
(72) Inventor: CHERNETA, Svetlana Galievna, Tomsk City, 634045 (RU); SOKOLOVSKIY, Igor Eduardovich, Tomsk City, 634055 (RU); BULAVIN, Alexandr Anatolievich, Tomsk City, 634063 (RU)
(74) Representative: Andrews, Martyn Peter
(86) International application number: PCT/RU2008/000062
(87) International publication number: WO 2008/100179

(56) References cited:
- EP-A1- 0 348 298
- WO-A1-2004/043115
- FR-A- 2 706 050
- FR-A1- 2 706 050
- FR-A1- 2 858 534
- GB-A- 2 041 575
- GB-A- 2 061 091
- RU-C2- 2 287 213
- US-A- 4 713 522

## Description

### Technical field

The inventions relate to the field of fulfilling human living requirements, and specifically to a household electric appliance, and are intended for the heat treatment of food products and water.

### Background art

An electric saucepan is known [EP 1115316, WO 9920163, Int. CI. A47J27/00. Maravic Dusko (CH)], said saucepan comprising an electrically heatable vessel with a heat source integrated in the base thereof. An electrically insulating layer, electrical resistance layer and heat-insulating layer are applied to the external side of the vessel base. Heat which can be generated outside the vessel penetrates the interior thereof through the base thereof.

A shortcoming of said device is the absence of an external body which protects a person from burns and furniture from damage, and also the absence of an option for controlling and regulating the food treatment time and temperature. A further saucepan is disclosed in GB-A-2061091.

A cordless electric kettle is known and selected as the prior art [RF patent No. 2287213, Int. Cl. *H01R33*/*20* (January 2006), *A47J27*/*082* (January 2006), published October 11, 2006], said kettle having a main body with a water-carrying vessel, and a heating element, heat-sensitive switch, and a base which, during use, is connected to an electric power source by an electric plug and socket unit which has a plug part provided on the main body or on the base and a socket part of the plug and socket unit either on the main body or on the base in order to provide an electrical connection therebetween in any relative rotational orientation about a vertical axis. That part of the plug and socket unit which is on the main body is supported on part of the body of the electric heating element. Electric conductors connect the part of the plug and socket unit on the main body to the heating element and/or to the heat-sensitive switch and are permanently fastened to the abovementioned part of the plug and socket unit on the main body. Part of a shell for enclosing the lower area of the water-containing vessel, heating element and heat-sensitive switch is supported on the abovementioned part of the plug and socket unit. The heating element and heat-sensitive switch are fastened to the lower area of the water-containing vessel.

Said device is not provided with an external body which protects a person from burns. The shell only encloses the lower part of the vessel. There is no option for program control as a function of the type of food being prepared.

### Disclosure of the invention

It is the object of the inventions to expand the range of devices of analogous purpose.

The object set is achieved by a device for the heat treatment of products according to independent claim 1.

The main body of the device can be in the form either of a saucepan, or a frying pan, or a kettle.

The technical solutions proposed provide control of the heating element and make it possible to automate the food preparation process: to establish the required temperature and time and to use various combinations thereof, with storage thereof in a memory, and also to measure the weight of the dish and calculate the amount of calories. A set of necessary commands is made possible with the aid of the keyboard. The display depicts the current food preparation parameters. When the installed program or combinations thereof is or are completed, the device is automatically switched off, accompanied by a corresponding audible signal.

The external - main-body of the proposed devices protects a person from bums and the surface of furniture from damage, since it does not heat up to a high temperature. Furthermore, the external body carries out the function of a Thermos, and thus keeps food warm for a long time and ensures a saving on electric energy. The hermetic nature of the connection between the external body and internal vessel and absence of leads make it possible to easily wash the utensils after the preparation of food, including washing them in a dishwasher.

The presence of the heat-reflecting screen which is arranged with a clearance between the bottom of the heatable vessel and the bottom of the body reduces heat losses, which increases the heating speed and provides a saving on electric energy.

In the device according to a first variant, the electrical connection between the base and main body is ensured in any relative rotational orientation about the vertical axis. The remote control device makes it possible to control the food preparation process remotely. Said device can be integrated into an "intelligent home" system and can be controlled using a cellphone or also via the Internet.

The provision of saucepans, a frying pan and kettle in one kit ensures the multifunctional nature of the device and the option of cooking, frying, stewing, boiling, heating up etc.

### Brief description of the drawings

Figure 1 depicts a general view of the first variant of the device for the heat treatment of products and water (without a remote control device);
Figure 2 shows the remote control device, in a view from the front and side;
Figure 3 depicts an equipment diagram for the first variant of the device;
Figure 4 depicts a general view of the second variant of the device; and
Figure 5 depicts an equipment part of the second variant of the device.

### Mode(s) for carrying out the invention

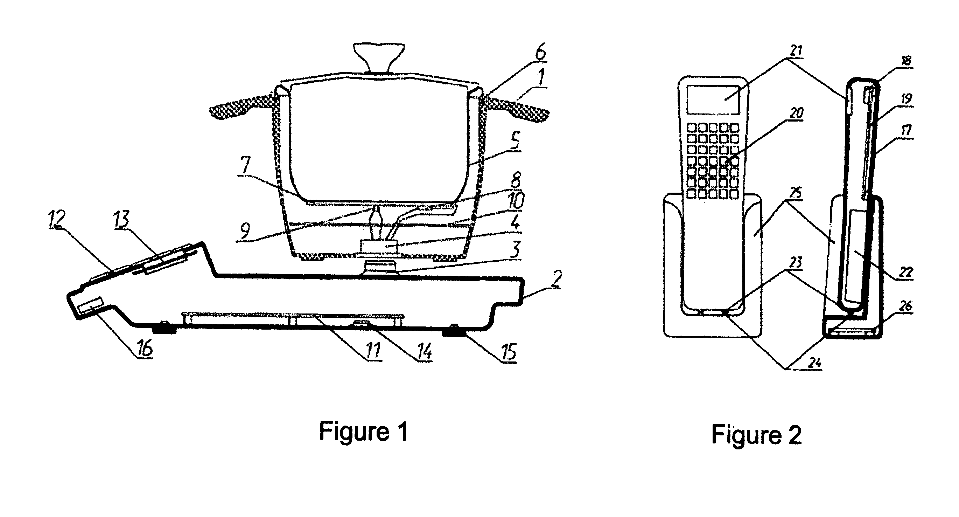

The device for the heat treatment of products according to the first variant comprises a body 1 (fig. 1) in the form of a saucepan, frying pan or kettle which can be placed on a separate base comprising a power supply and control module 2. A connection therebetween is provided by an electric plug and socket unit. The upper surface of the base is provided with the socket part 3 of the electric plug and socket unit while the plug part 4 is in the central part of the bottom of the body 1.

A vessel 5 of smaller volume is arranged with a clearance (either filled with air or a heat insulator) within the body 1 and is hermetically connected thereto at the top via a heat-resistant sealing ring 6. The inner side of the vessel 5 can be covered with an anti-stick layer.

The external side of the bottom of the vessel 5 is equipped with a heating element 7 comprising either a heat-conducting device fastened to the external side of the bottom of the vessel 5 or a covering based on film-type heating elements, said covering being applied directly to the external side of the bottom of the vessel 5. A thermal fuse 8 and temperature sensor 9 are connected to the heating element 7 and, in turn, are connected to the plug part 4 of the electric plug and socket unit.

A heat-reflecting screen 10 is arranged with a clearance between the bottom of the vessel 5 and bottom of the body 1.

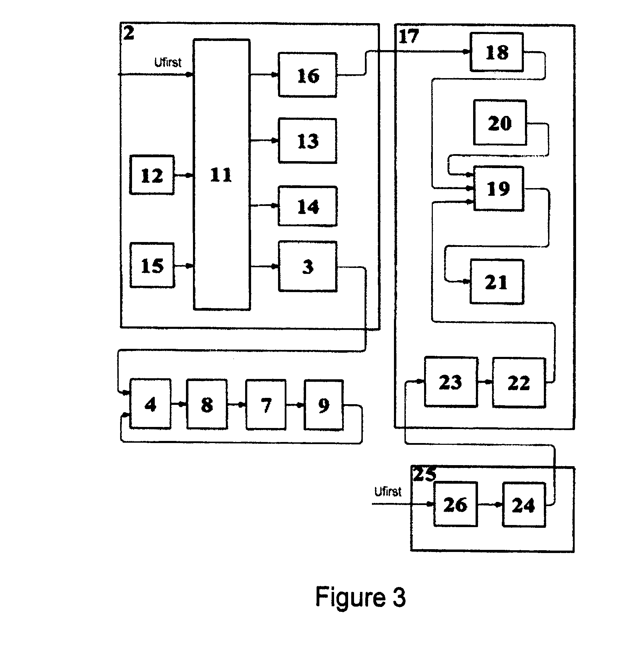

The power supply and control module 2 (fig. 3) comprises a first control unit 11 which is electrically connected to a first keyboard 12, first display 13, dynamic loudspeaker 14, pressure sensor 15, transceiver 16, socket part 3 of the electric plug and socket unit and, by an electric lead, to the electric power source.

The remote control device 17 comprises a second transceiver 18 connected to a second control unit 19 to which a second keyboard 20, second display 21 and storage battery 22 are connected, said storage battery being connected via a first electric contact 23 to a second electric contact 24 of a recharging module of the remote control device 25. The second electric contact 24 is connected to a voltage converter 26 which is attached to the electric power source.

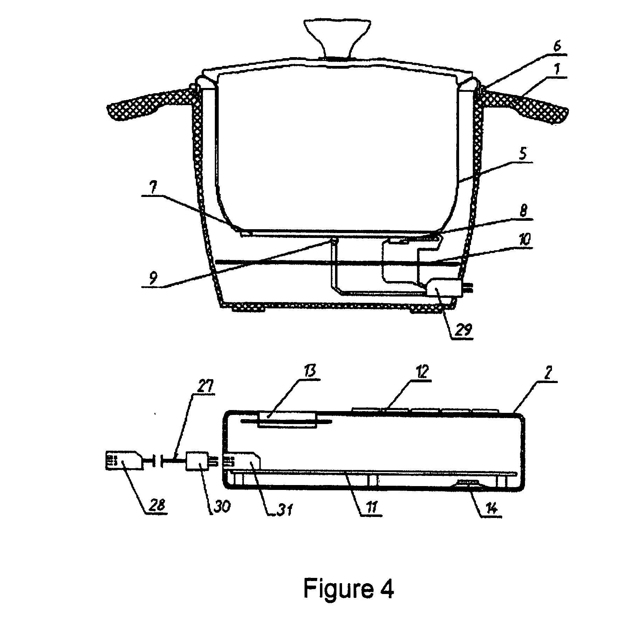

In the second variant of the device for the heat treatment of products, the body 1 (fig. 4) is connected to the power supply and control module 2 by means of an electric cord 27 and electric plug and socket units arranged thereon. The socket part 28 of the first electric plug and socket unit is arranged on one side of the electric cord 27 while the plug part 29 of the first electric plug and socket unit is constructed in a lateral surface of the body 1. The plug part 30 of the second electric plug and socket unit is arranged on the other side of the electric cord 27 while the socket part 31 of the second electric plug and socket unit is constructed on a lateral surface of the power supply and control module 2.

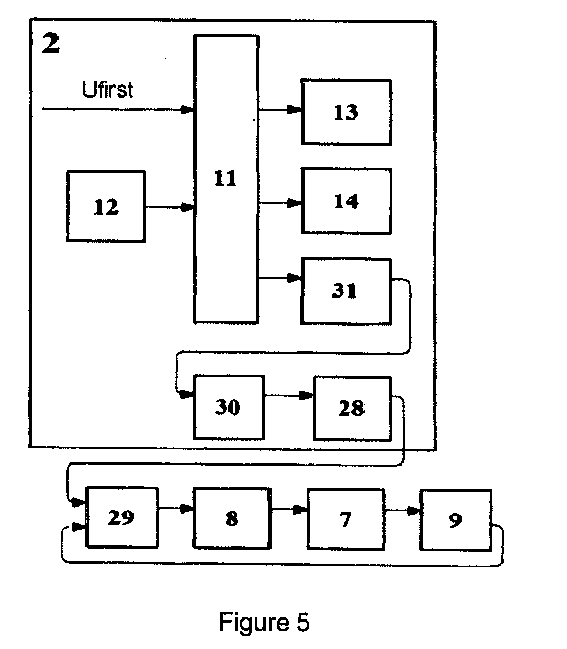

The thermal fuse 8 and temperature sensor 9 are connected to the heating element 7 and, in turn, are connected to the plug part 29 of the first electric plug and socket unit (fig. 5).

The power supply and control module 2 comprises a control unit 11 which is electrically connected to a keyboard 12, display 13, dynamic loudspeaker 14, and to an electric power source, and, via a socket part 31, to the plug part 30 of the second electric plug and socket unit.

The device for the heat treatment of products according to the first variant operates as follows.

When electric power is supplied to the first control unit 11, the voltage is converted and fed to the first keyboard 12, pressure sensor 15, first display 13, dynamic loudspeaker 14 and first transceiver 16. A closed contact between the socket part 3 and plug part 4 of the electric plug and socket unit ensures the mechanical connection thereof when the body 1 is placed onto the power supply and control module 2.

Corresponding commands concerning the operating modes of the device (temperature and heating time, number and name of the program, measuring of the weight, calculation of calories, etc.) are issued with the aid of the first keyboard 12 and enter the input of the first control unit 11. Signals from the pressure sensor 15 also enter the first control unit 11. The first control unit 11 converts the signals from the first keyboard 12 and signals from the pressure sensor 15 into digital codes and transmits the result to the first display 13, and also generates a signal which is transmitted to the dynamic loudspeaker 14. The first control unit 11 also feeds the voltage to the socket part 3 of the electric plug and socket unit which transmits the voltage via the plug part 4 of the electric plug and socket unit and thermal fuse 8 to the heating element 7. The temperature sensor 9 records the changes in temperature, generates an analogous signal and transmits the latter to the input of the first control unit 11 via the electric plug and socket unit. The first control unit 11 converts the analogous voltage value into digital code and transmits the latter to the first display 13, and also generates a signal which controls the supply of voltage to the heating device 7. All of the digital signals transmitted by the first control unit 11 to the first display 13 are converted into a frequency signal and transmitted to the first transceiver 16.

A remote control device 17 operates by simultaneously fulfilling the following conditions: by supplying voltage from the storage battery 22 to the second control unit 19 and by supplying a signal concerning the switching on of the remote control device 17 from the second keyboard 20 to the second control unit 19. This can be realized in the following manner.

Voltage from the output of the storage battery 22 enters the input of the second control unit 19. Voltage from the output of the second control unit 19 enters the second keyboard 20 and second display 21. A signal concerning the switching on of the remote control device 17 passes from the output of the second keyboard 20 to the input of the second control unit 19, said signal closing an electric switch in the second control unit 19 and feeding voltage from the output thereof to the input of the second transceiver 18.

In order to charge up the storage battery 22, use is made of a voltage converter 26 which transmits the power voltage via the first electric contact 23 and second electric contact 24, which form a closed loop, and charges the storage battery 22.

Signals concerning corresponding commands pass from the second keyboard 20 to the second control unit 19, the latter converting said signals into digital codes and transmitting them to the second display 21, and also generating a signal and transmitting the latter to the input of the second transceiver 18.

The interaction of the power supply and control module 2 with the remote control device 17 ensures an exchange of signals between the first transceiver 16 and second transceiver 18. Signals are transmitted from the output of the first transceiver 16 to the input of the second transceiver 18, the second transceiver 18 transmitting said signals to the second control unit 19. The second control unit 19 converts the signals into digital codes and transmits the latter to the input of the second display 21. Signals are transmitted from the output of the second transceiver 18 to the input of the first transceiver 16, the first transceiver 16 transmitting said signals to the first control unit 11. The first control unit 11 converts the signals into digital codes, transmits them to the first display 13 and generates corresponding control signals.

The device for the heat treatment of products according to the second variant operates as follows.

When electric power is fed to the control unit 11, voltage is converted and is fed to the keyboard 12, display 13 and dynamic loudspeaker 14. The closed contact between the socket part 28 and plug part 29 of the first electric plug and socket unit, and also between the plug part 30 and socket part 31 of the second electric plug and socket unit ensures the mechanical connection thereof.

Corresponding commands concerning the operating modes of the device (temperature and heating time, number of program combinations, number and name of the program, calculation of calories, etc.) are issued with the aid of the keyboard 12 and enter the input of the control unit 11. The control unit 11 converts the signals into digital codes and transmits the result to the display 13 and also generates a signal which is transmitted to the dynamic loudspeaker 14. The control unit also feeds voltage to the heating element 7 via the electric plug and socket units and thermal fuse 8. The temperature sensor 9 records the change in temperature of the heating device 7, generates an analogous signal and transmits the latter to the input of the control unit 11 via electric plug and socket units. The control unit 11 converts an analogous voltage value into digital code and transmits the latter to the display 13, and also generates signals of corresponding control commands and a signal which controls the feeding of voltage to the heating element 7.

The vessel 5 can be manufactured from stainless steel, the external body 1 of the device from thermoplastic, and the heat-reflecting screen 10 from aluminum. The socket part 3 and plug part 4 of the electric plug and socket unit can be realized using electric plug and socket units R72A and R72C (STRIX), and the socket parts 28, 31 and plug parts 29, 30 of the first and second electric plug and socket units can be realized using electric plug and socket units AC101 and AC102. Film-type heaters (for example technical specification U29.7-23501650-002-2003) or tubular heating elements can be used as the heating element 7. The thermal fuse 8 can be realized using TZD 270 and the temperature sensor 9 using TS 0295/1; TP 0188/1. A first control unit 11 and second control unit 19 can be realized using microcircuits ATmega 16-16A1, the first display 13 and second display 21 using the indicator OSD20400M01, the dynamic loudspeaker 14 using the sound emitter EFM-250D (EAST), the pressure sensor 15 using the microcircuit MS54XX, and the first transceiver 16 and second transceiver 18 using AT86RF21 1 S (Atmel). The storage battery 22 can be realized using an Ni-MH battery, 750 mAh (Panasonic). The first electric contact 23 and second electric contact 24 are made of current-conducting metal. A transformer BVEI 303 2030 1 BA/6B (HAHN) can be selected as the voltage converter 26. Any electronic device combined with a control unit 11 with a communication channel (for example radio channel of a mobile telephone, wire communication, etc.) can be selected as the remote control device 17.

## Claims

1. A device for the heat treatment of products, said device comprising a main body (1) with a vessel (5) which is equipped with a heating element (7) on the external side of the bottom of the vessel and a thermal fuse (8), and a power supply and control module (2); wherein the body (1) is connectable to an electric power source via a plug part (4, 29) of an electric plug and socket unit, **characterized in that** the vessel, which is hermetically connected to an upper part of the body via a heat-resistant sealing ring (6), is arranged with a clearance within the body, a heat-reflecting screen (10) is placed with a clearance between the bottom of the vessel and bottom of the body, the thermal fuse (8) and a temperature sensor (9) are connected to the heating device and, in turn, are connected to the plug part (4, 29) of the electric plug and socket unit, which part is constructed in a lateral surface or the bottom of said body, further wherein said power supply and control module comprises a control unit (11) which is connected to a keyboard (12), a display (13), a dynamic loudspeaker (14), a socket part (3, 31) of an electric plug and socket unit, and the electric power source.

2. The device as claimed in claim 1 wherein said plug part (4) of the electric plug and socket unit is constructed in a lateral surface of the body and wherein the plug part (4) of the electric plug and socket unit is connectable to a socket part (31) of an electric lead (27).

3. The device as claimed in claim 2 wherein a plug part (30) of the electric lead (27) is connectable to the socket part (31) of the electric plug and socket unit of the power supply and control module (2).

4. The device as claimed in claim 1 wherein the power supply and control module (2) is used as a base, wherein the central, upper part of the base is provided with the socket part (3) of the electric plug and socket unit and the bottom of the body is provided with the plug part (4) of the electric plug and socket unit.

5. The device as claimed in claim 4 wherein the control unit is connected to a pressure sensor (15).

6. The device as claimed in claim 4 or claim 5 wherein the control unit is connected to a transceiver (16).

7. The device as claimed in claim 6 wherein the module is connectable by means of either a radiocommunication or infrared communication to a transceiver (18) of a remote control device (17).

8. The device as claimed in claim 7 wherein the remote control device (17) is connectable to a recharging module (25) which is attached to the electric power source.

9. The device as claimed in claim 8, **characterized in that** the remote control device comprises a control unit (19) which is connected to the transceiver (18), keyboard (20), display (21) and storage battery (22) thereof, and an electric contact (23), which is connectable to an electric contact (24) of the recharging module (25), is attached to said storage battery (22), the transceiver (18) communicatable with the transceiver (16) of the power supply and control module (2) by radiocommunication or infrared communication.

10. The device as claimed in claim 9, **characterized in that** the recharging module (25) of the remote control device comprises a voltage converter (26) which is attached to the electric power source, the voltage converter (26) being connected to an electric contact (24) which communicates with an electric contact (23) of the remote control device.

11. The device as claimed in any one of claims 1-10, **characterized in that** the main body can be in the form either of a saucepan, or a frying pan, or a kettle.

## Patentansprüche

1. Vorrichtung für die Wärmebehandlung von Produkten, wobei die Vorrichtung einen Hauptkörper (1) mit einem Gefäß (5) umfasst, der mit einem Heizelement (7) an der Außenseite des Bodens des Gefäßes und einer Thermosicherung (8) und einem Stromversorgungs- und Steuermodul (2) ausgestattet ist; wobei der Körper (1) über ein Steckerteil (4, 29) einer elektrischen Stecker- und Buchseneinheit an eine elektrische Stromquelle anschließbar ist, **dadurch gekennzeichnet, dass** das Gefäß, das über einen hitzebeständigen Dichtungsring (6) hermetisch mit einem oberen Teil des Körpers verbunden ist, mit einem Zwischenraum innerhalb des Körpers angeordnet ist, ein Hitze reflektierender Schirm (10) mit einem Zwischenraum zwischen dem Boden des Gefäßes und dem Boden des Körpers angebracht ist, die Thermosicherung (8) und ein Temperatursensor (9) mit der Heizvorrichtung verbunden sind und wiederum mit dem Steckerteil (4, 29) der elektrischen Stecker- und Buchseneinheit verbunden sind, wobei dieses Teil in einer Seitenfläche oder im Boden des Körpers angebracht ist, wobei ferner das Stromversorgungs- und Steuermodul eine Steuereinheit (11) umfasst, die mit einer Tastatur (12), einer Anzeige (13), einem dynamischen Lautsprecher (14), einem Buchsenteil (3, 31) einer elektrischen Stecker- und Buchseneinheit und der elektrischen Stromquelle verbunden ist.

2. Vorrichtung nach Anspruch 1, wobei das Steckerteil (4) der elektrischen Stecker- und Buchseneinheit in einer Seitenfläche des Körpers angebracht ist und wobei das Steckerteil (4) der elektrischen Stecker- und Buchseneinheit mit einem Buchsenteil (31) einer elektrischen Leitung (27) verbindbar ist.

3. Vorrichtung nach Anspruch 2, wobei ein Steckerteil (30) der elektrischen Leitung (27) mit dem Buchsenteil (31) der elektrischen Stecker- und Buchseneinheit des Stromversorgungs- und Steuermoduls (2) verbindbar ist.

4. Vorrichtung nach Anspruch 1, wobei das Stromversorgungs- und Steuermodul (2) als Basis verwendet wird, wobei der zentrale, obere Teil der Basis mit dem Buchsenteil (3) der elektrischen Stecker- und Buchseneinheit und der Boden des Körpers mit dem Steckerteil (4) der elektrischen Stecker- und Buchseneinheit versehen ist.

5. Vorrichtung nach Anspruch 4, wobei die Steuereinheit mit einem Drucksensor (15) verbunden ist.

6. Vorrichtung nach Anspruch 4 oder Anspruch 5, wobei die Steuereinheit mit einem Sender/Empfänger (16) verbunden ist.

7. Vorrichtung nach Anspruch 6, wobei das Modul entweder über eine Funkverbindung oder eine Infrarotverbindung mit einem Sender/Empfänger (18) einer entfernten Steuervorrichtung (17) verbindbar ist.

8. Vorrichtung nach Anspruch 7, wobei die entfernte Steuervorrichtung (17) an ein Lademodul (25) anschließbar ist, das mit der elektrischen Stromquelle verbunden ist.

9. Vorrichtung nach Anspruch 8, **dadurch gekennzeichnet, dass** die entfernte Steuervorrichtung umfasst: eine Steuereinheit (19), die mit dem Sender/Empfänger (18), der Tastatur (20), der Anzeige (21) und dem Akkumulator (22) derselben[bezieht sich m.E. auf remote control device] verbunden ist, und einen elektrischen Kontakt (23), der an einen elektrischen Kontakt (24) des Lademoduls (25) anschließbar ist, mit dem Akkumulator (22) verbunden ist, wobei der Sender/Empfänger (18) mit dem Sender/Empfänger (16) des Stromversorgungs- und Steuermoduls (2) über eine Funkverbindung oder eine Infrarotverbindung in Verbindung bringbar ist.

10. Vorrichtung nach Anspruch 9, **dadurch gekennzeichnet, dass** das Lademodul (25) der entfernten Steuervorrichtung einen Spannungswandler (26) umfasst, der mit der elektrischen Stromquelle verbunden ist, wobei der Spannungswandler (26) an einen elektrischen Kontakt (24) angeschlossen ist, der mit einem elektrischen Kontakt (23) der entfernten Steuervorrichtung in Verbindung steht.

11. Gerät nach einem der Ansprüche 1-10, **dadurch gekennzeichnet, dass** der Hauptkörper entweder die Form einer Kasserolle oder einer Bratpfanne oder eines Kessels haben kann.

## Revendications

1. Dispositif de traitement thermique de produits, ledit dispositif comprenant un corps principal (1) avec un récipient (5) qui est équipé d'un élément chauffant (7) sur le côté externe du fond du récipient et d'un fusible thermique (8), et un module de commande et d'alimentation électrique (2); dans lequel le corps (1) peut être raccordé à une source d'alimentation électrique par une partie enfichable (4, 29) d'une unité électrique fiche-prise, **caractérisé en ce que** le récipient, qui est raccordé hermétiquement à une partie supérieure du corps par un joint d'étanchéité thermorésistant (6), est disposé avec un jeu dans le corps, un écran thermoréfléchissant (10) est placé avec un jeu entre le fond du récipient et le fond du corps, le fusible thermique (8) et une sonde de température (9) sont raccordés au dispositif chauffant et, à leur tour , sont raccordés à la partie enfichable (4, 29) de l'unité électrique fiche-prise, laquelle partie est construite dans une surface latérale ou dans le fond dudit corps, dans lequel en outre ledit module de commande et d'alimentation électrique comprend une unité de commande (11) qui est raccordée à un clavier (12), un écran (13), un haut-parleur dynamique (14), une partie prise (3, 31) d'une unité électrique fiche-prise et à la source d'alimentation électrique.

2. Dispositif selon la revendication 1, dans lequel ladite partie fiche (4) de l'unité électrique fiche-prise est construite dans une surface latérale du corps et dans lequel la partie fiche (4) de l'unité électrique fiche-prise peut être raccordée à une partie prise (31) d'un câble électrique (27).

3. Dispositif selon la revendication 2, dans lequel une partie fiche (30) du câble électrique (27) peut être raccordée à la partie prise (31) de l'unité électrique fiche-prise du module de commande et d'alimentation électrique (2).

4. Dispositif selon la revendication 1, dans lequel le module de commande et d'alimentation électrique (2) sert de base, la partie supérieure centrale de la base étant dotée de la partie prise (3) de l'unité électrique fiche-prise et le fond du corps étant doté de la partie fiche (4) de l'unité électrique fiche-prise.

5. Dispositif selon la revendication 4, dans lequel l'unité de commande est raccordée à un capteur de pression (15).

6. Dispositif selon l'une des revendications 4 ou 5 dans lequel l'unité de commande est raccordée à un émetteur-récepteur (16).

7. Dispositif selon la revendication 6, dans lequel le module peut être raccordé soit par communication radio, soit par communication infrarouge à un émetteur-récepteur (18) d'un dispositif de commande à distance (17).

8. Dispositif selon la revendication 7, dans lequel le dispositif de commande à distance (17) peut être raccordé à un module de recharge (25) qui est fixé à la source d'alimentation électrique.

9. Dispositif selon la revendication 8, **caractérisé en ce que** le dispositif de commande à distance comprend une unité de commande (19) qui est raccordée à l'émetteur-récepteur (18), au clavier (20), à l'écran (21) et à la batterie de stockage (22) de celui-ci et un contact électrique (23), qui peut être raccordé à un contact électrique (24) du module de recharge (25), est fixé à ladite batterie de stockage (22), l'émetteur-récepteur (18) pouvant communiquer avec l'émetteur-récepteur (16) du module de commande et d'alimentation électrique (2) par communication radio ou par communication infrarouge.

10. Dispositif selon la revendication 9, **caractérisé en ce que** le module de recharge (25) du dispositif de commande à distance comprend un convertisseur de tension (26) qui est fixé à la source d'alimentation électrique, le convertisseur de tension (26) étant raccordé à un contact électrique (24) qui communique avec un contact électrique (23) du dispositif de commande à distance.

11. Dispositif selon l'une des revendications 1 à 10, **caractérisé en ce que** le corps principal peut être sous la forme d'une casserole, d'une poêle ou d'une bouilloire.
